# EUROPEAN PATENT APPLICATION

(11) **EP 1 281 987 A2**
(43) Date of publication of application: **05.02.2003**
(21) Application number: 02255429.9
(22) Date of filing: 02.08.2002
(51) Int. Cl.: G02B 6/132, G02B 6/134

(54) **Oxide structure useable for optical waveguide and method of forming the oxide structure**

(30) Priority: 03.08.2001 US 310026 P
(71) Applicant: ASML US, Inc., Scott Valley, California 95066 (US)
(72) Inventor: Mogaard,Martin, Scotts Valley, CA 95066 (US)
(74) Representative: Stoner, Gerard Patrick

(57) **Abstract**

A method of forming an oxide structure and an oxide structure formed by the method. In one embodiment a lower cladding layer on a substrate is provided. At least one core layer is formed on lower cladding layer, the core layer includes boron at a concentration that produces substantially zero internal stress of said core layer. At least one upper cladding layer is formed on the core layer wherein at least one of the upper and lower cladding layers include germanium at a concentration level such that the upper and lower cladding layers exhibit substantially equivalent refractive indices.

## Description

The present invention claims the benefit of U.S. Provisional Patent application serial number 60/310,026 filed on August 3, 2001, the disclosure of which is hereby incorporated by reference.

The present invention relates to oxide structures and methods of forming oxide structures. More specifically, the present invention relates to the deposition of germanium (Ge) and boron (B) doped oxide structures which are particularly useful as optical waveguides.

Silica based oxide structure or films are widely used in a variety of industries, most commonly in the semiconductor industry. More recently, silica based oxide films have been employed in optical applications, notably in the fabrication of optical waveguides.
In the optical waveguide industry, current techniques used for the deposition of oxide structures or films are primarily plasma chemical vapor deposition (PCVD) and flame hydrolysis deposition. Both techniques suffer from significant drawbacks. For example, the use of Plasma CVD and/or FHD causes a substantial amount of hydrogen incorporation into the oxide films formed. Neither Plasma CVD nor FHD is conducive to producing a large number of substrates coated with oxide films in a given amount of time. Oxide films deposited either by Plasma CVD or FHD tend to suffer from poor uniformity of refractive index and thickness, even when formed at the same time on the same substrate.

Another deposition technique often employed in the semiconductor industry is atmospheric pressure CVD (APCVD). Semiconductor oxide structures must satisfy many film properties such as low stress, thickness uniformity, conformality, among many others. Oxide structures for optical waveguides must also satisfy similar film properties. Of particular difficulty, the silica films used in optical waveguides are typically much thicker (up to about 25 µm or more) than conventional semiconductor films, and this presents significant problems with high film stress. High film stress, either compressive or tensile, contributes to polarization dependent loss (PDL) which is detrimental to optical waveguides.

Accordingly, new methods for deposition of silica based films are needed. In particular, it would be preferable to form oxide films and structures that have a low level of hydrogen incorporation, uniform indices of refraction, and uniform thicknesses, especially when formed on the same substrate. It would also be preferable to economically produce a high number of substrates coated with oxide films number of substrates coated with oxide films in a relatively short amount of time.

In one aspect of the present invention, a method of forming an oxide structure is provided comprising the steps of:
providing a substrate, forming a lower cladding layer on the substrate, forming a set of core layers on the lower cladding layer, heating the set of core layers to form a consolidated core layer, preferably patterning and etching the consolidated core layer to form an individual core, preferably forming a set of upper cladding layers around the individual core, and preferably heating the set of upper cladding layers to form a consolidated upper cladding layer.

In another aspect of the present invention, an oxide structure is provided including a lower cladding layer on a substrate, a set of core layers on the lower cladding layers, wherein a capping core layer in the set of core layers includes less boron than at least one other core layer in the set of core layers, and a consolidated upper cladding layer on the set of core layers.

In a further embodiment of the present invention, an oxide structure is provided including a lower cladding layer on a substrate, a consolidated core layer on the lower cladding layer, and a set of upper cladding layers on the consolidated core layer, wherein a capping cladding layer in the set of upper cladding layers includes less boron than at least one other upper cladding layer in the set of upper cladding layers.

In another aspect of the present invention a method of forming an optical waveguide having at least one core and at least one upper and lower cladding layer by chemical vapor deposition is provided, characterized in that the at least one core layer includes boron at a concentration level that produces substantially zero internal film stress, and at least one of the upper and lowers cladding layers includes germanium at a concentration level such that the upper and lower cladding layers exhibit substantially equivalent refractive indices.

In yet another aspect of the present invention, and oxide structure is provided having a lower cladding layer formed on a substrate; at least one core layer formed on the lower cladding layer, said core layer including boron at a concentration that produces substantially zero internal stress of said core layer; and at least one upper cladding layer formed on the core layer wherein at least one of the upper and lower cladding layers includes germanium at a concentration level such that the upper and lower cladding layers exhibit substantially equivalent refractive indices.
The detailed description of preferred embodiments will refer to the following drawings, wherein like numerals refer to like elements, and wherein:
FIGURE 1 is a cross-section view of a muffle with multiple deposition chambers in one example of a CVD system wherein a method according to an embodiment of the present invention may be performed;
FIGURE 2A is a cross-sectional view of a substrate with a lower cladding layer;
FIGURE 2B is a cross-sectional view of the substrate illustrated in FIGURE 2A after a set of core layers has been formed on a surface of the lower cladding layer according to one embodiment of the present invention;
FIGURE 2C is a cross-sectional view of the substrate illustrated in FIGURE 2B after the set of core layers has been annealed to form a consolidated core layer;
FIGURE 2D is a cross-sectional view of the substrate illustrated in FIGURE 2C after a set of masking regions has been formed on the consolidated core layer;
FIGURE 2E is a cross-sectional view of the substrate illustrated in FIGURE 2D after the consolidated core layer has been etched, leaving a set of individual cores under the set of masking regions;
FIGURE 2F is a cross-sectional view of the substrate illustrated in FIGURE 2E after the set of masking regions has been removed;
FIGURE 2G is a cross-sectional view of the substrate illustrated in FIGURE 2F after a set of upper cladding layers has been formed over the set of individual cores according to one embodiment of the present invention;
FIGURE 2H is a cross-sectional view of the substrate illustrated in FIGURE 2F after the set of upper cladding layers has been annealed to form a consolidated upper cladding layer;
FIGURE 3 is a flowchart that includes representative steps of a method of forming an oxide structure that may be used as an optical waveguide according to one embodiment of the present invention;
FIGURE 4 shows two Secondary Ion Mass Spectroscopy (SIMS) plots of boron concentrations as a function of depth in a representative structure deposited in two successive passes according to an exemplary embodiment of the present invention. The first plot shows the concentration before annealing and the second plot shows the concentration after annealing;
FIGURE 5 shows two SIMS plots of germanium concentrations as a function of depth in a representative structure deposited in two successive passes according to an exemplary embodiment of the present invention. The first plot shows the concentration before annealing and the second plot shows the concentration after annealing;
FIGURE 6 illustrates a representative curve of internal stress in germanium and boron-doped silica glass films after being annealed at 1100°C for 30 minutes under a nitrogen atmosphere as a function of the boron concentration in the film;
FIGURE 7 illustrates a curve of internal annealed stress as a function of film thickness for films that have a 1.9 kÅ thermal oxide underlayers and that were formed using 32.5 mol % B2H6 and 6 mol % GeH4 reactant gases; and
FIGURE 8 illustrates the substantially linear relationship between germanium concentration and value of refractive index for films with 1.9 kÅ thermal oxide underlayers that have been annealed at 1100°C for 30 minutes in a nitrogen atmosphere.
A method of forming an oxide structure, and an oxide structure particularly suitable for optical waveguides are provided by the present invention. In one preferred aspect of the present invention, the method generally comprising the steps of: providing a substrate having a lower cladding layer on the substrate, forming a set of core layers atop the lower cladding layer, heating the set of core layers to form a consolidated core layer, patterning and etching the consolidated core layer to form one or more individual cores, and forming an upper cladding layer atop the one or more individual cores. In another embodiment of the present invention the upper cladding layer may be comprised of a set of upper cladding layers formed atop the individual cores, and the upper cladding layers are heated form a consolidated upper cladding layer. Of partioular advantage (as will be described in detail below), the set of core layers, and optionally additionally the set of upper cladding layers, are preferably formed with different dopant concentration levels which are selectively controlled to provide desired refractive index and/or stress properties to the core and cladding layers. Below will be described representative methods of forming oxide structures that may be used as optical waveguides. Representative oxide structures that can be made via the representative methods will also be described. Further, experimental results pertaining to the materials used in the oxide structures will be discussed.

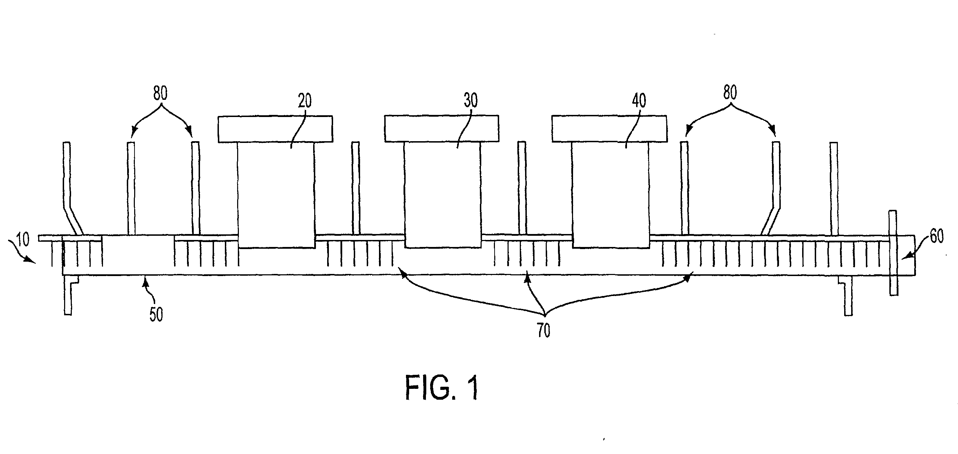

FIGURE 1 illustrates a cross-sectional view of a muffle having multiple deposition chambers for an Atmospheric Pressure Chemical Vapor Deposition (APCVD) system that may be used to deposit layers of materials on a variety of substrates. While one specific example of an APCVD system is shown, it is to be understood that other types of CVD and APCVD systems may be employed to carry out the method of the present invention. Further, the method is not limited to atmospheric pressure CVD system operation, and other systems may be used such as low pressure CVD, plasma enhanced CVD, and the like.

In operation, substrates such as, but not limited to, silicon substrates, silica glass substrates, and GaAs substrates, may enter the APCVD system through the entrance 10 of the muffle 12. The substrates then may proceed through the first deposition chamber 20, second deposition chamber 30, and third deposition chamber 40 of the CVD system where layers of material may be formed on the substrates. The substrates generally are moved through the deposition chambers 20, 30, 40 of the muffle 12 by a conveyor belt 50 on which the substrates may be placed at the entrance 10 of the muffle 12 and from which the substrates may be removed at the exit 60 of the muffle 12.

To form layers of material (i.e., films) in each of the chambers 20, 30, 40, gaseous reactants may be introduced into each of the chambers 20, 30, 40 through gas lines that are not illustrated in FIGURE 1 but that are connected to each of the chambers 20, 30, 40. Once reactants have been introduced in a chamber, a chemical reaction may proceed and the product of that reaction may form a layer or film of material on the exposed surface of the substrate that is moving through the chamber on the conveyor belt 50.

In order to isolate the chambers 20, 30, 40 from each other and to allow for separate chemical reactions to occur in each of the chambers 20, 30, 40, sets of curtains 70 may be preferably positioned between the chambers 20, 30, 40 and inert gas lines 80 (i.e., plenums) may pump inert gas (such as nitrogen, argon and the like) between the chambers 20, 30, 40. The inert gas typically flows through the curtains 70 and into one of the chambers 20, 30, 40, thereby forcing all of the gaseous reactants to remain in the chambers into which the gaseous reactants were introduced. The inert gas and excess reactants may be removed from the chambers through exhaust vents that are not illustrated in FIGURE 1. A more detailed description of the illustrative CVD system is found in U.S. Patent no. 4,834,020, the entire disclosure of which is hereby incorporated by reference.

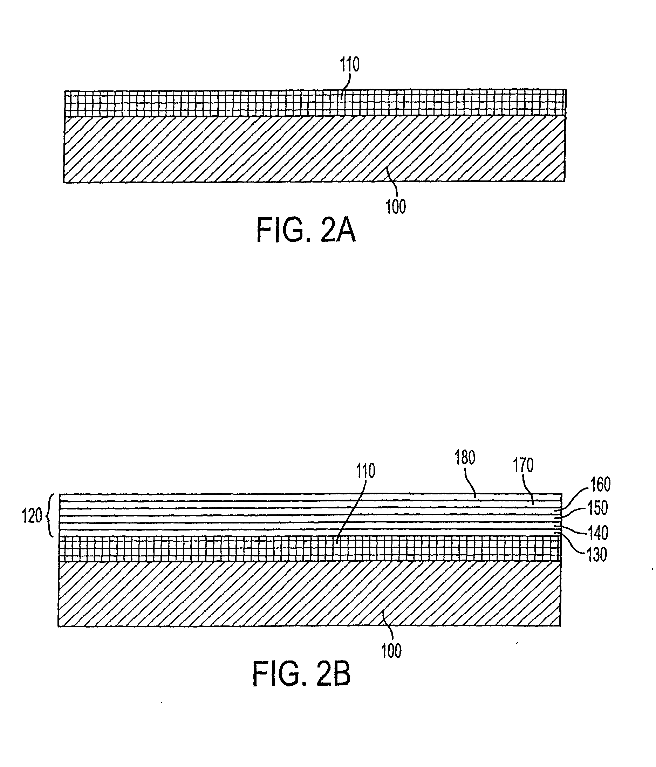

FIGURES 2A-2H illustrate cross-sectional views of a substrate 100 as the substrate 100 goes through the steps of a representative method of the present invention of forming an oxide structure thereon. The representative oxide structure may be used as an optical waveguide.

The substrate 100 may include, for example, bare silicon, silicon having an oxide layer thereon, any III-V compound, any II-VI compound, any glass composition, and any other material onto which oxide structures may be formed. The steps of the representative methods discussed herein may be conducted in an APCVD system similar to the device illustrated in FIGURE 1 or in any other CVD system known in the art for forming oxide structures.

FIGURE 2A is a cross-sectional view of the substrate 100 with a lower cladding layer 110, or buffer layer, formed thereon. The lower cladding layer 110 may be a thermal oxide and/or may be doped with a dopant such as, but not limited to, germanium and boron. In the alternative, the lower cladding layer 110 may remain undoped. In another embodiment, the lower cladding layer may be deposited by CVD, however in the preferred embodiment the oxide layer is a thermal oxide layer which is thermally grown by well known techniques.

The lower cladding layer 110 may be formed of any desired thickness. The thickness of the lower cladding layer 110 may depend on the particular application. In one embodiment, the lower cladding layer 110 has a thickness of up to approximately 15 microns. Even thicker layers may be used, but economic and logistic limitations generally make formation of thicker layers undesirable. The lower cladding layer 110 is preferably formed by well known standard oxide growth methods (e.g., heating the substrate 100 under a steam or oxygen atmosphere), or alternatively may be formed by deposition processes such as, but not limited to, the CVD process discussed above.

To form the core layer in an optical waveguide, a set of core layers 120 are formed on or atop the lower cladding layer. FIGURE 2B is a cross-sectional view of the substrate 100 illustrated in FIGURE 2A after a set of core layers 120 has been formed on the lower cladding layer 110. The set of core layers 120 are comprised of multiple individual core layers. Any number of individual core layers may comprise the set of core layers 120, and generally will be governed by the desired thickness of the final or consolidated core layer 190. In the example shown in FIGURE 2B, six individual core layers make up the set of core layers 120. The individual core layers 130, 140, 150, 160, 170, 180 in the set of core layers 120 may be oxide layers and may be formed by passing the substrate 100 one or more times through the chambers 20, 30, 40 of a CVD system, such as the system discussed above. For example, a first core layer 130, second core layer 140, and third core layer 150 in the set of core layers 120 may be formed during a first pass through a CVD system when using a conveyorized CVD system with multiple chambers as illustrated in FIGURE 1, and additional core layers (e.g., a fourth core layer 160, fifth core layer 170, and sixth core layer 180) may be formed or deposited during successive passes through the system. In an alternative embodiment, where a single wafer CVn system is used, the individual core layers may successively deposited in individual deposition steps in a single chamber.

Of particular advantage, the present invention provides for the formation of the core and cladding layers with dopants such that the core and cladding layers exhibit properties desirable for optical waveguides. In particular, boron is used as a dopant which impacts the film stress of annealed layers. The inventor has discovered that varying the boron concentration level in a layer provides to the ability to "tune" the annealed film stress levels across a wide range. This range can cover both tensile (i.e. positive) and compressive (i.e. negative) film stresses. Minimizing the film stress in an optical waveguide structure or device, particularly in the top cladding and core layers, can provide optical advantages and improved performance of the device.

Additionally, germanium is used as a dopant which impacts the refractive index of the film or layer. The inventor has discovered that varying the germanium concentration level in a layer adjusts the refractive index of the layer. According to the present invention this allows one to form top and bottom cladding layers that exhibit substantially equivalent refractive index properties, even if the top and bottom cladding layers are of different material and/or thicknesses.

The representative individual core layers 130, 140, 150, 160, 170, 180 in the set of core layers 120 (and all other oxide layers discussed herein) are preferably formed to include germanium and/or boron. The germanium may be used to control the refractive index of each of the individual layers and the boron may be used to control the internal stress level within each of the individual layers. Dependant upon the refractive index value desired, the individual core layers 130, 140, 150, 160, 170, 180 in the set of core layers 120 may be formed to include up to approximately 50 weight percent germanium. However, much lower percentages of germanium (for example between approximately 8 and 12 weight percent) are more commonly used.

When choosing the boron weight percentage of any of the oxide layers discussed herein, the effect of the boron on the chemical stability of the layer should be taken into consideration, since higher weight percentages of boron (e.g., above approximately 6 weight percent boron) may render an oxide layer chemically unstable. More specifically, under ambient conditions, an oxide with more than approximately 6 weight percent of boron may become hygroscopic and may therefore form crystals at the surface of the oxide layer that is exposed to the ambient conditions. This is a reaction that is preferably avoided when forming optical waveguides and other oxide structures.

However, weight percentages of boron above 6% are often desirable for reducing the internal stresses within an oxide layer. Hence, in order to retain chemical stability while benefiting from reduced internal film stress, oxide layers containing more than approximately 6 weight percent of boron may be protected from being exposed to ambient conditions by one or more "capping" layers. The capping layer(s) may include less than 6 weight percent of boron and may, for example, be formed on top of one or more "other" or "capped" layers that contain more than approximately 6 weight percent of boron.

If a three-chamber CVD system is used to form the set of core layers 120, the individual core layers grown in the first chamber 20 and second chamber 30 may remain under an inert gas atmosphere (e.g., a nitrogen atmosphere) or may be "capped" with additional layers before exiting the CVD system. The layers grown in the third deposition chamber 40 (e.g., the third core layer 150 and the sixth core layer 180 in FIGURE 2B) however, may get exposed to ambient conditions upon exiting the CVD system. Therefore, layers grown in the third deposition chamber 40, in this embodiment called capping layers, typically include less boron than the layers deposited in the first deposition chamber 20 and/or in the second deposition chamber 30.

More specifically, the third core layer 150 and sixth core layer 180 will include a boron concentration which renders the layer chemically stable in the atmosphere, while one or more of the other individual layers will contain a boron concentration which renders those layer(s) chemically unstable in ambient conditions. Chemically stable is used herein to mean the layer does not form surface crystal defects when exposed to ambient conditions for at least several hours, in other words the layer is not hygroscopic, and generally will contain less than approximately 6 weight percent of boron. The one or more of the other individual core layers 130, 140, 160, 170 which may be chemically unstable may include more than approximately 6 weight percent of boron. Preferably, in this specific example where the set of core layers is comprised on six individual core layers formed in two passes through the three chamber CVD system shown in FIGURE 1, the third core layer 150 and sixth core layer 180 (the capping core layers) include less than approximately 5 weight percent of boron. To provide the low stress advantage the other core layers 130, 140, 160, 170 will contain a higher boron concentration, and in an exemplary example will include more than 6 weight percent boron, more usually between approximately 6 and 12 weight percent of boron. Even more preferably, one or more of the other core layers 130, 140, 160, 170 include between approximately 8 and 10 weight percent of boron. However, the weight percentages discussed above are not limiting and other weight percentages may be used. The key factor is to provide a boron concentration in the individual core layers that provides the desired film stress properties while providing a capping layer with a chemically stable level of boron such that the structure does not become hygroscopic during and/or after processing.

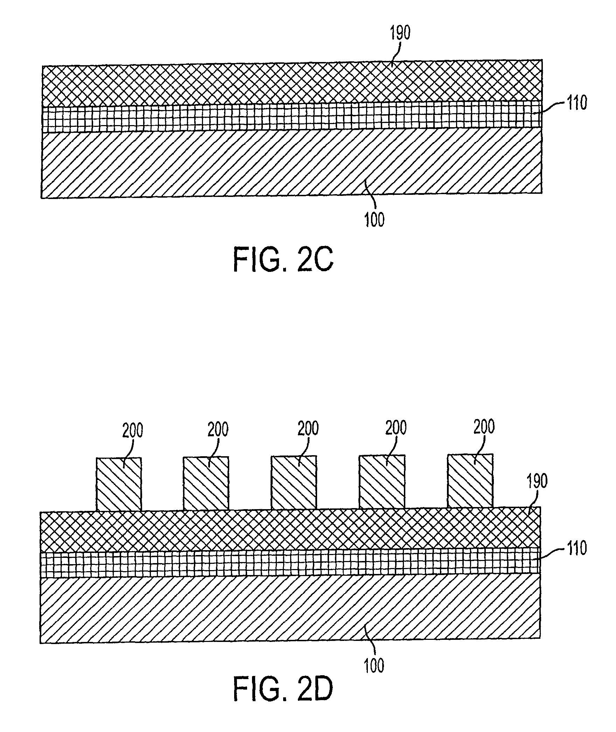

FIGURE 2C illustrates a cross-sectional view of the substrate 100 illustrated in FIGURE 2B after the set of core layers 120 has been annealed (i.e., heated) to form a consolidated core layer 190. The heating or annealing process that forms the consolidated core layer 190 may include heating the set of core layers 120 to between approximately 1000 and 1100°C for approximately 30 minutes. The annealing may be performed in an environment such as, but not limited to, a nitrogen atmosphere or a steam atmosphere. *As* the set of core layers 120 are annealed, boron may migrate and/or diffuse. Hence, pursuant to the annealing process, the resultant consolidated core layer 190 may have substantially zero internal stress throughout (less than about 5 MPa).

Because it is often convenient to form all of the individual core layers 130, 140, 150, 160, 170, 180 with approximately the same weight percentage of germanium (in one example approximately 10 weight percent), and because Ge is a relatively large atom, a large amount of germanium migration and/or diffusion typically does not occur during annealing. Instead, the germanium concentration is typically set as the layers are formed in order to obtain the refractive index desired.

The consolidated core layer 190 preferably has a thickness of between approximately 1 and 6 microns. However, the thickness of the consolidated core layer 190 is not limited to this range and will generally be based on the particular application or requirements for the waveguide structure. The thickness may be affected by how many times the substrate 100 passes through a CVD system, how many deposition chambers are in the CVD system, how much material is deposited by a shower head device to form the layer 190, and the like.

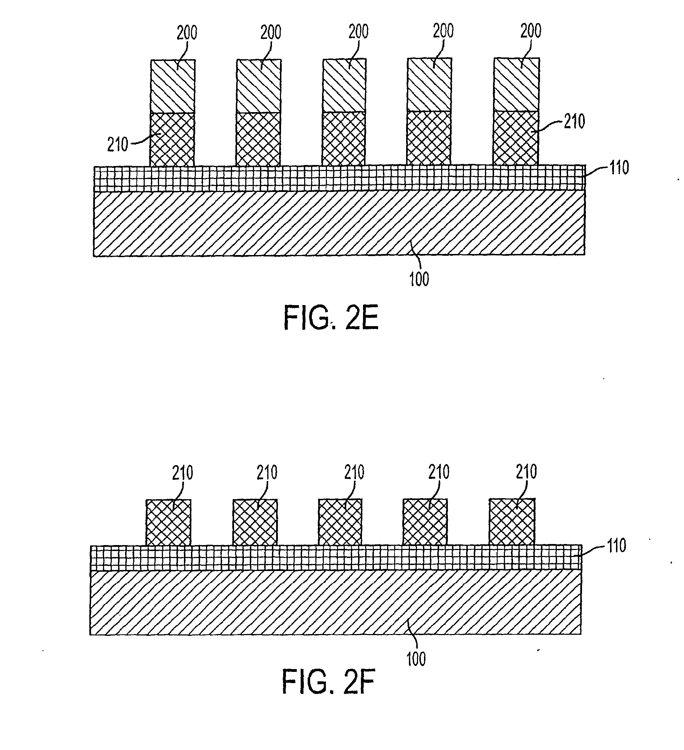

Dependent upon the boron content of the individual core layers 130, 140, 150, 160, 170, 180 and the annealing time and temperature chosen, the annealing step can greatly reduce and, according to certain embodiments, substantially eliminates internal stress within the consolidated core layer 190. Because of diffusion of boron atoms during the annealing process, boron atoms from underlying layers will travel into the capping layer and reduce internal stress therein. To form the oxide structure of an embodiment of the present invention, FIGURE 2D illustrates a cross-sectional view of the substrate 100 illustrated in FIGURE 2C after a set of masking regions 200 has been formed on the consolidated core layer 190. The set of masking regions 200 may be formed from any material known in the art to be useful for patterning substrates (e.g., photoresist), and by known techniques. The masking regions 200 may then be used to form the individual cores 210 illustrated in FIGURE 2E.

FIGURE 2E illustrates a cross-sectional view of the substrate 100 illustrated in FIGURE 2D after portions of the consolidated core layer 190 have been etched away, leaving a set of individual cores 210 under the set of masking regions 200. Any etching technique know in the art may be used to remove selected portions of the consolidated core layer 190 to form the set of individual cores 210.

FIGURE 2F illustrates a cross-sectional view of the substrate 100 illustrated in FIGURE 2E after the set of masking regions 200 has been removed. Any method known in the art for removing masking regions 200 may be used.

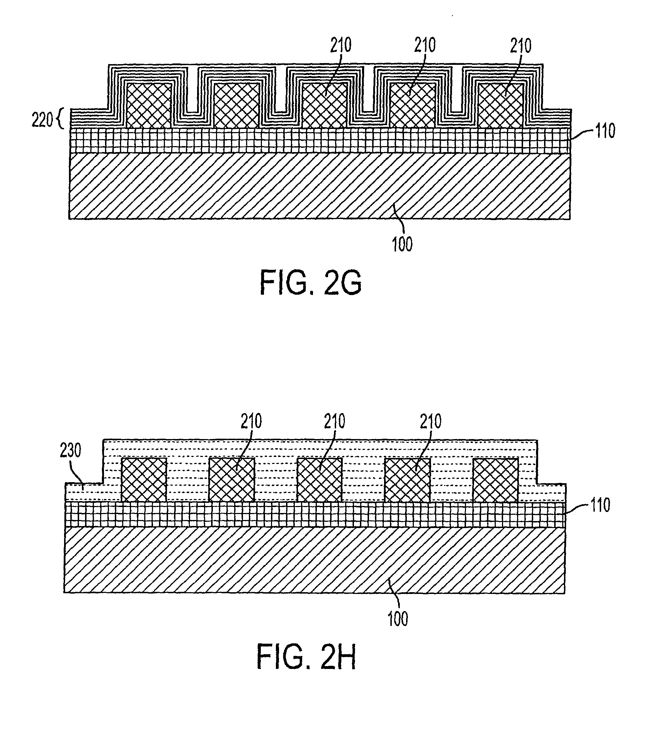

FIGURE 2G illustrates a cross-sectional view of the substrate 100 illustrated in FIGURE 2F after a set of upper cladding layers 220 has been formed over and around the set of individual cores 210 according to one embodiment of the present invention. In this specific embodiment, the set of upper cladding layers 220 is similar to the set of core layers 120 discussed above at least because the set of upper cladding layers 220 may be deposited with an CVD system and may include lower-boron-content capping upper cladding layers which are chemically stable under ambient conditions. The capping upper cladding layers may be formed above other upper cladding layers that may include higher boron weight percentages. The set of upper cladding layers 220 may also include germanium to control the optical properties (e.g., refraction index) of the set of upper cladding layers 220.

For optical waveguide applications it is important that the upper and lower cladding layers exhibit substantially similar refractive index properties, and thus appear as "one" cladding layer. The consolidated upper cladding layer 230 may contain between approximately 4 and 6 weight percent of germanium. Preferably, the consolidated upper cladding layer 230 may contain approximately 5 weight percent of germanium. Like the set of core layers 120, the set of upper cladding layers 220 may be formed by processes other than the APCVD process.

According to certain embodiments, capping upper cladding layers (i.e., those layers formed in the final deposition chamber of an CVD system) may include less than approximately 6 weight percent of boron in order to assure chemical stability under ambient conditions. According to certain other embodiments, the capping upper cladding layers may include less than approximately 6 weight percent of boron.

The "capped" or intermediate upper cladding layers (i.e., those layers formed below the capping upper cladding layers), on the other hand, may include more than approximately 6 weight percent of boron and therefore may be used to provide enough boron to produce a substantially internal-stress-free consolidated upper cladding layer after a heating or annealing process has been performed. According to certain preferred embodiments, the capped upper cladding layers may include less than approximately 12 weight percent of boron or, more preferably, may include between approximately 8 and 10 weight percent of boron.

FIGURE 2H illustrates a cross-sectional view of the substrate 100 illustrated in FIGURE 2G after the set of upper cladding layers 220 has been heated or annealed to form a consolidated upper cladding layer 230. Similarly to the heating or annealing process discussed in conjunction with the set of core layers 120 and the consolidated core layer 190, the heating or annealing process that forms the consolidated upper cladding layer 230 may include heating the set of upper cladding layers 220 to between approximately 1000 and 1100°C for approximately 30 minutes. The annealing may be performed in an environment such as, but not limited to, a nitrogen atmosphere or a steam atmosphere. As the set of core layers 220 are annealed, boron will migrate and/or diffuse. Hence, the resultant consolidated upper cladding layer 230 may have substantially zero internal stress pursuant to the annealing process.

According to certain embodiments, the lower cladding layer 110 and the consolidated upper cladding layer 230 may include approximately the same weight percentage of germanium According to certain other embodiments, the lower cladding layer 110 and the consolidated upper cladding layer 230 may include different weight percentages of germanium, so long as the lower cladding layer 110 and the consolidated upper cladding layer 230 have approximately equal indices of refraction. In other words, the lower cladding layer 110 and the consolidated upper cladding layer 230 may be different oxides, or even different materials altogether, and therefore may include different weight percentages of germanium, so long as there is an approximate equivalence of indices of refraction.

According to certain embodiments, the upper cladding layer may have a thickness of between approximately 10 and 30 microns. The core layer will typically exhibit an index of refraction that is greater than the index of refraction of the upper and lower cladding layers. Germanium may be added to the core layer to adjust or increase the index of refraction of the core layer to generate an offset from the index of refraction in the cladding layers, and generally the germanium concentration in the core layer will be in the range of 10 to 50 weight percent.

Although there has been much reference above to capping layers, if the substrate 100 remains under non-ambient conditions after passing through the exit 60 of the CVD system, and if the substrate 100 is subsequently re-introduced into the CVD system to form additional layers thereon, only one chemically-stable, lower-boron-weight-percentage, capping layer may be needed. Such a capping layer would only need to be formed before the substrate 100 becomes exposed to an ambient environment.. In other words, a capping layer does not need to be deposited every time that the substrate 100 exits the CVD system if the substrate 100 is not exposed to ambient conditions before being returned to the device for additional layer deposition. Logistical and economic factors often make forming a capping layer every time that the substrate 100 exits the CVD system preferable.

In addition to the CVD system discussed above, any and/or all of the oxide layers (core, cladding, or otherwise) discussed herein may be formed using alternate devices and methods. In an alternative embodiment of the present invention a "shower bead" single chamber CVD system (wherein a shower head type of gas distributor supplies one or more reactant gases to a reaction chamber) may be used. When a shower head single chamber CVD system is used, the shower head gas distributor may initially deposit material with a high weight percentage of boron and, as the desired thickness of the layer is approached, the boron weight percentage of the subsequently-deposited material may be lowered to below approximately 6 weight percent in order to form a "capping" portion. This capping portion protects the underlying portion of the layer and enhances the chemical stability of the entire layer as the layer exits the reaction chamber and becomes exposed to ambient conditions. In this type of system, the core layer has regions of varying boron concentration as opposed to discrete individual layers. Further in this embodiment, the core layer having regions of varying boron concentration are be formed in one chamber, and/or in one pass.

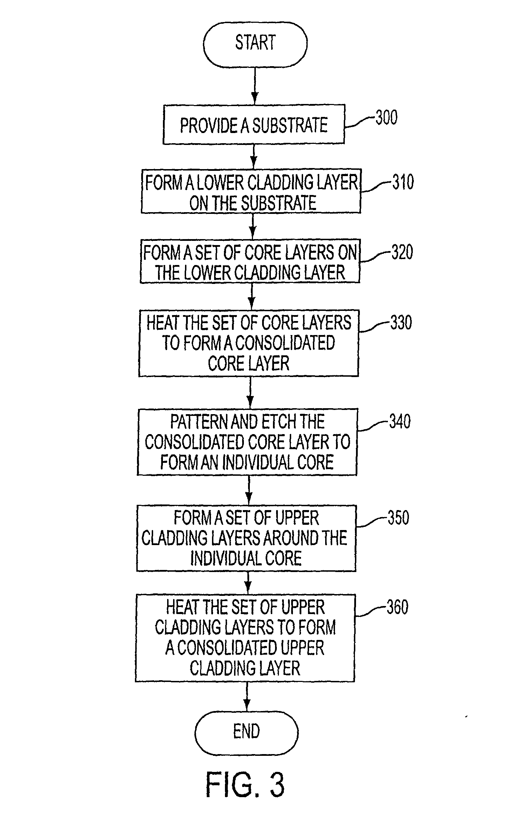

FIGURE 3 illustrates a flowchart that includes some representative steps of a method of forming an oxide structure that may be used as a waveguide according to one embodiment of the present invention. Step 300 specifies providing a substrate. Step 310 then specifies forming a lower cladding layer on the substrate. Alternatively, the substrate may be provided already having a lower cladding layer formed on the substrate. Step 320 then specifies forming a set of core layers on the lower cladding layer. Step 330 specifies heating the set of core layers to form a consolidated core layer. Step 340 specifies patterning and etching the consolidated core layer to form an individual core. Step 350 specifies forming a set of upper cladding layers around the individual core. Step 360 specifies heating the set of upper cladding layers to form a consolidated upper cladding layer.

A number of experiments were performed according to various embodiments of the present invention. The following experimental examples are provided for illustration purposes only and are not intended to limit the scope of the present invention in any way.

### EXAMPLE #1

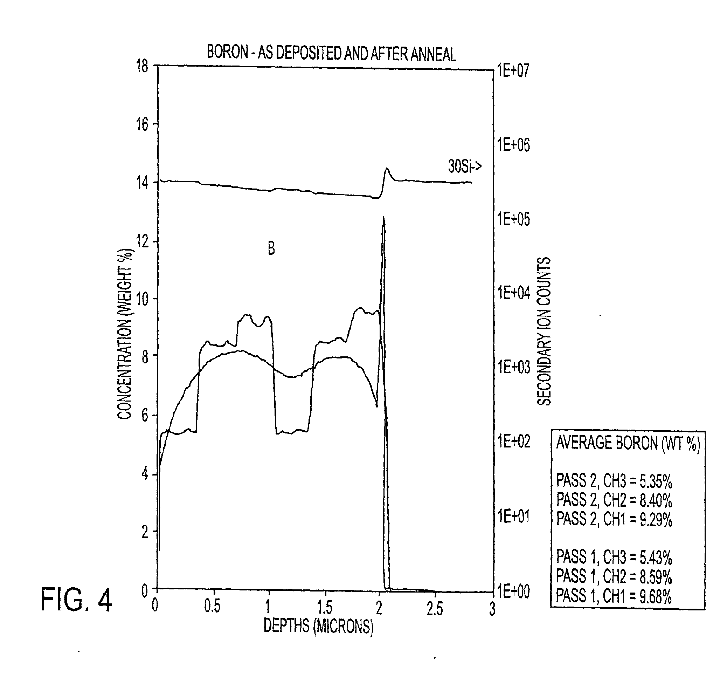

Methods according to embodiments of the present invention were carried out to form oxide structures. In this example silicon substrates were placed in a CVD system of the type illustrated in FIGURE 1. Boron doped oxide layers were deposited by CVD at temperatures in the range of about 300 °C to 500 θC, with a temperature of about 430 °C being most typical. To deposit the film, an oxygen containing source such as oxygen, ozone and the like, and a silicon containing reactant (R), such as silane and the like, are conveyed to the substrate. In this example, oxygen to reactant are provided at a 75:1 volumetric flow rate ratio , and the total chemical flowrate per chamber was about 50 seem. To dope with film with boron, a boron containing source, in this example diborane (B₂H₆)was conveyed to the chambers at varied flowzates depending upon the concentration of boron desired in the film. FIGURE 4 illustrates two Secondary Ion Mass Spectroscopy (SIMS) plots of boron concentrations as a function of depth in the representative structure or film, before and after annealing. Curve A, with more steps i.e. sharp concentration rises and falls, represents the boron concentration in the representative film after the substrate has passed through a three-chamber CVD system twice. The larger depth represents the beginning of the process, so when reading the plot from left to right you see pass 2 - chamber 3, then 2, then 1; and then pass 1 - chamber 3, then 2 then 1. During the first pass, the first deposition chamber deposited an oxide film with 9.68 wt. % boron, the second deposition chamber deposited an oxide film with 8.59 wt. % boron, and the third deposition chamber deposited an oxide film with 5.43 wt. % boron. During the second pass, the first deposition chamber deposited an oxide film with 9.29 wt. % boron, the second deposition chamber deposited an oxide film with 8.40 wt. % boron, and the third deposition chamber deposited an oxide film with 5.35 wt. % boron. Curve B, the smoother more rounded curve, represents the substrate after it has been annealed. As shown, the boron concentration profile evens out substantially pursuant to the annealing.

### EXAMPLE #2

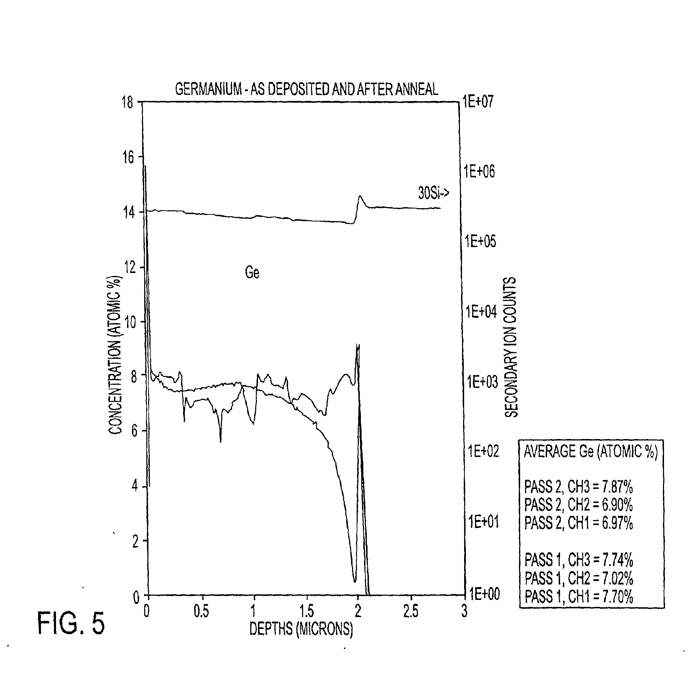

In this example silicon substrates were placed in a CVD system of the type illustrated in FIGURE 1. Germanium doped oxide layers were deposited by CVD at temperatures in the range of about 300 °C to 500 °C, with a temperature of about 430 °C being most typical. To deposit the film, an oxygen containing source such as oxygen, ozone and the like, and a silicon containing reactant (R), such as silane and the like, are conveyed to the substrate. In this example, oxygen to reactant are provided at a 75:1 ratio, and the total chemical flowrate per chamber was about 50 seem. To dope with film with germanium, a germanium containing source, in this example germane (GeH₄) was conveyed to the chambers at varied flowrates depending upon the concentration of germanium desired in the film. FIGURE 5 illustrates two SIMS plots of germanium concentrations as a function of depth in a representative substrate, before and after annealing. Like in FIGURE 4, the substrate has passed through a three-chamber CVD system twice. During the first pass, the first deposition chamber deposited an oxide film with 7.70 wt. % germanium, the second deposition chamber deposited an oxide film with 7.02 wt. % germanium, and the third deposition chamber deposited an oxide film with 7.74 wt, % germanium. During the second pass, the first deposition chamber deposited an oxide film with 6.97 wt. % germanium, the second deposition chamber deposited an oxide film with 6.90 wt. % germanium, and the third deposition chamber deposited an oxide film with 7.87 wt. % germanium. The concentration curve with sharper peaks and valleys was measured before annealing while the smoother curve was measured after annealing. The germanium profile evens out pursuant to the annealing, but depletes at the substrate interface.

### EXAMPLE #3

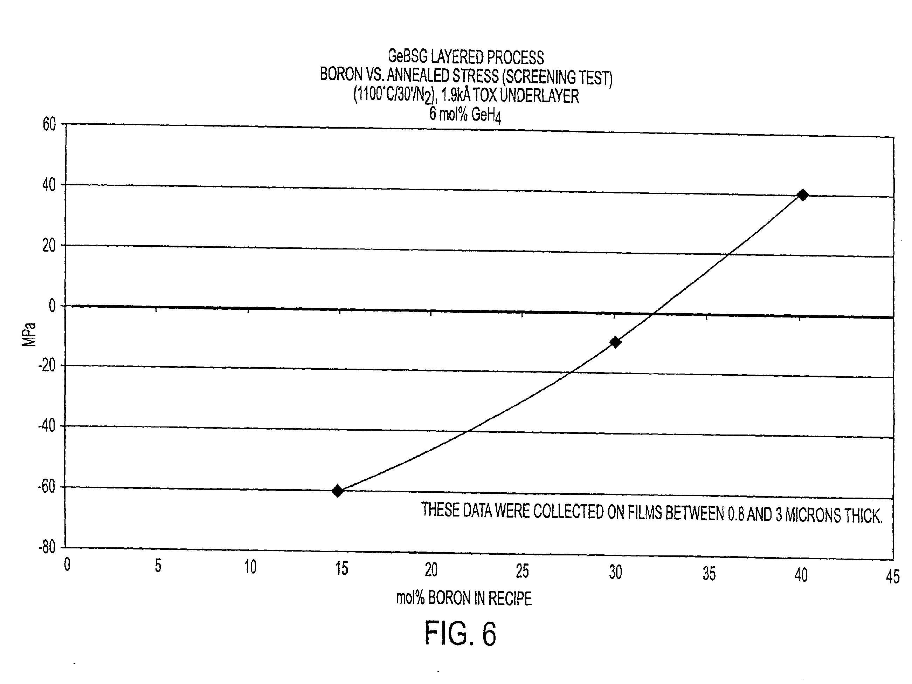

Germanium boron doped silicate glass (GeBSG) films deposited on a thin thermally grown oxide layer were formed, with 6 mol % germane and varied mol % boron. The films had thicknesses in the range of about 0.8 to 3 microns. The films were then annealed. FIGURE 6 illustrates a representative curve of internal stress in the germanium- and boron-doped silica glass films after being annealed at 1100°C for 30 minutes under a nitrogen atmosphere as a function of the boron concentration in the film. As shown, at approximately 31 mol % boron, an annealed film that is substantially free of internal stress can be formed.

### EXAMPLE #4

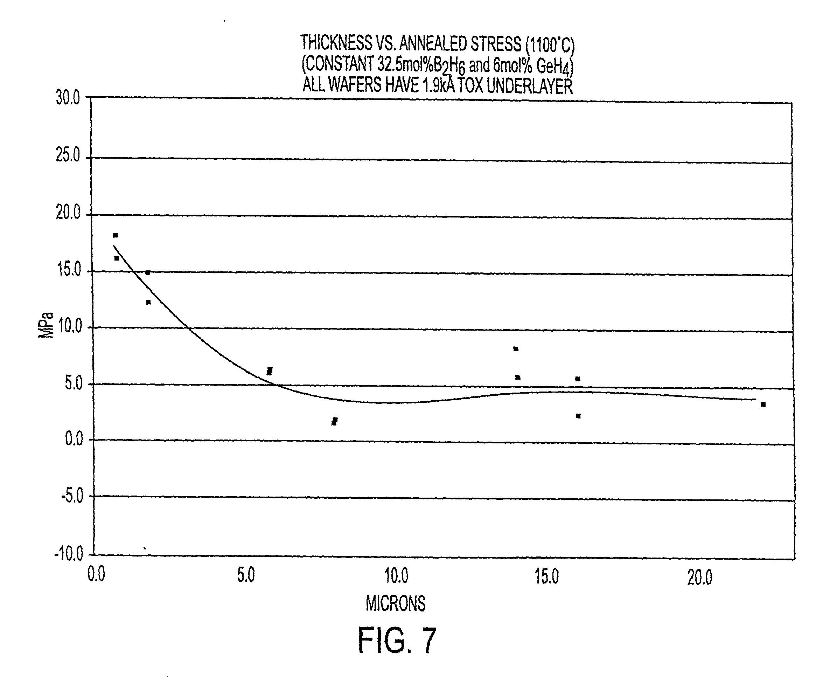

In this example silicon substrates having an initial layer comprised of a thermal oxide layer of 1.9 k/ thick were placed in a CVD system of the type illustrated in FIGURE 1. Boron and germanium doped oxide layers were deposited by CVD at a temperatures of about 430 °C In this example, the oxygen to reactant are provided at a 75:1 ratio, and the total chemical flowrate per chamber was about 50 sccm. To dope with film with boron, diborane at about 32.5 mol % was conveyed at a substantially constraint rate. To dope the film with germanium, germane at about 6 mol % was conveyed at a substantially constant rate. FIGURE 7 illustrates the internal annealed stress as a function of film thickness for the deposited films. The curve in FIGURE 7 shows that low and relatively constant internal stress levels may be obtained for films with thicknesses above 20.0 microns.

### EXAMPLE #5

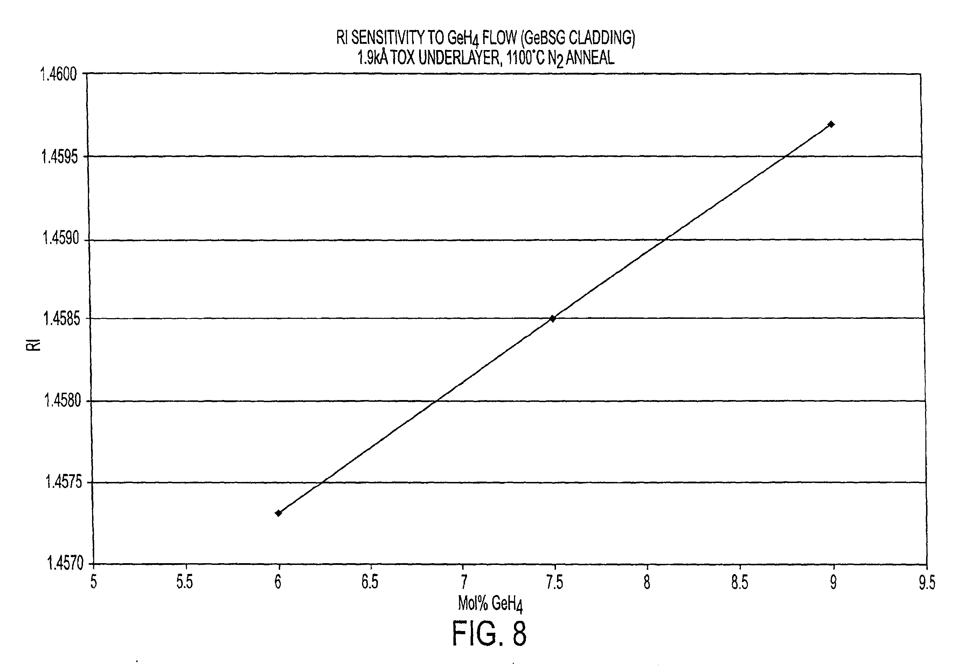

FIGURE 8 illustrates the substantially linear relationship between germanium concentration and value of refractive index for films with 1.9 kÅ thermal oxide underlayers that have been annealed at 1100°C for 30 minutes. GeH4 was used as a reactant gas and the mol % of GeH4 in the recipe is represented on the horizontal axis of the graph. Oxygen and reactant were conveyed at a ratio of about 75:1 and deposition was carried out at about 430 θC.

The forgoing detailed description and examples have been given for understanding exemplary implementations of oxide structures and methods of forming oxide structures. No unnecessary limitations should be understood there from, as modifications will be obvious to those skilled in the art without departing from the scope of the scope of the invention.

## Claims

1. A method of forming an oxide structure, comprising:
providing a substrate having a lower cladding layer on the substrate;
forming a set of core layers on the lower cladding layer;
heating the set of core layers to form a consolidated core layer; and
forming at least one upper cladding layer on the consolidated core.

2. The method of claim 1, wherein the lower cladding layer has a thickness of up to approximately 15 microns.

3. The method of claim 1, wherein the lower cladding layer is a thermal oxide layer.

4. The method of claim 1, wherein the forming the set of core layers step comprises passing the substrate through a Chemical Vapor Deposition (CVD) system at least one time to deposit the set of core layers.

5. The method of claim 1, wherein the forming the set of core layers step comprises forming the set of core layers to include at least one of germanium and boron.

6. The method of claim 1, wherein the forming the set of core layers step comprises forming the set of core layers to include up to 50 weight percent germanium.

7. The method of claim 1, wherein the heating the set of core layers step comprises heating the substrate to between approximately 1000 and 1100°C, for approximately 30 minutes, in at least one of a nitrogen atmosphere and a steam atmosphere.

8. The method of claim 1, wherein the step of forming a set of core layers further comprises: forming at least one of the core layers with a boron concentration that is chemically unstable in ambient conditions, and forming a top capping layer within said set of core layers, said top copping layer having a boron concentration that is chemically stable in ambient conditions

9. The method of claim 1 further comprising, after heating the set of core layers, the step of:
patterning and teching the consolidated core layer to form at least one individual core.

10. The method of claim 1, wherein the heating the set of upper cladding layers step forms the consolidated upper cladding layer with approximately 4 to 6 weight percent of germanium.

11. An oxide structure, comprising:
a lower cladding layer on a substrate;
a set of core layers on the lower cladding layers, wherein a capping core layer in the set of core layers includes less boron than at least one other core layer in the set of core layers; and
at least one upper cladding layer on the set of core layers.

12. The oxide structure of claim 11, wherein the capping core layer includes less than approximately 6 weight percent of boron.

13. The oxide structure of claim 12, wherein at least one other core layer includes approximately 6 weight percent and greater of boron.

14. The oxide structure of claim 13, wherein at least one of the upper and lower cladding layers includes germanium.

15. The oxide structure of claim 11, wherein the lower cladding layer and the consolidated upper cladding layer comprise approximately the same weight percentage of germanium.

16. The oxide structure of claim 11, wherein the lower cladding layer and the at least one upper cladding layer comprise weight percentages of germanium that provide approximately equal refraction indices in the layers.

17. The oxide structure of claim 11, wherein the lower cladding layer is a thermal oxide layer.

18. The oxide structure of claim 11, wherein the at least one upper cladding layer has a thickness of between approximately 10 and 30 microns.

19. An oxide structure, comprising:
a lower cladding layer on a substrate;
a consolidated core layer on the lower cladding layer; and
a set of upper cladding layers on the consolidated core layer, wherein a capping cladding layer in the set of upper cladding layers includes less boron than at least one other upper cladding layer in the set of upper cladding layers.

20. The oxide structure of claim 19, wherein the consolidated core layer comprises approximately 10 weight percent of germanium.

21. The oxide structure of claim 19, wherein the consolidated core layer has a thickness of between approximately 1 and 6 microns.

22. The oxide structure of claim 19, wherein the capping upper cladding layer includes less than approximately 6 weight percent of boron.

23. The oxide structure of claim 19, wherein at least one other upper cladding layer includes more than approximately 6 weight percent of boron,

24. The oxide structure of claim 19, wherein at least one other upper cladding layer includes less than approximately 12 weight percent of boron.

25. The method of claim 1 wherein the forming at least one upper cladding layer further comprises forming a set of upper cladding layers having varied boron concentration levels, and heating the set of upper cladding layers to form a consolidated upper cladding layer.

26. A method of forming an optical waveguide having at least one core and at least one upper and lower cladding layer by chemical vapor deposition, **characterized in that** the at least one core layer includes boron at a concentration level that produces substantially zero internal film stress, and at least one of the upper and lowers cladding layers includes germanium at a concentration level such that the upper and lower cladding layers exhibit substantially equivalent refractive indices.

27. The method of claim 25 wherein at least one of the upper and lower cladding layers include boron at a concentration level that produces zero internal film stress.

28. The method of claim 25 wherein said method is carried out in an atmospheric pressure CVD system.

29. The method of claim 25 wherein said method is carried out in a shower head single wafer CVD system.

30. An oxide structure, comprising:
a lower cladding layer formed on a substrate;
at least one core layer formed on the lower cladding layer, said core layer including boron at a concentration that produces substantially zero internal stress of said core layer; and
at least one upper cladding layer formed on the core layer wherein at least one of the upper and lower cladding layers includes germanium at a concentration level such that the upper and lower cladding layers exhibit substantially equivalent refractive indices.
